# EUROPEAN PATENT SPECIFICATION

(11) **EP 1 469 167 B1**
(45) Date of publication and mention of the grant of the patent: **02.11.2005**
(21) Application number: 04003199.9
(22) Date of filing: 12.02.2004
(51) Int. Cl.: F01L 1/02, F16H 7/06, F01L 1/053

(54) **Camshaft drive for engine**
Nockenwellenantrieb für Brennkraftmaschine
Système d'entraînement d'arbre a cames pour moteur

(30) Priority: 17.04.2003 JP 2003113071
(43) Date of publication of application: 20.10.2004
(73) Proprietor: Tsubakimoto Chain Co., Osaka 530-0018, (JP)
(72) Inventor: Shintani, Tadashi c/o Tsubakimoto Chain Co., Kita-ku Osaka 530-0018 (JP)
(74) Representative: Maisch, Thomas

(56) References cited:
- EP-A- 1 046 790
- WO-A-01/49977
- US-A- 5 058 458
- US-A- 5 470 282
- US-B2- 6 367 435
- PATENT ABSTRACTS OF JAPAN vol. 0152, no. 53 (M-1129), 27 June 1991 (1991-06-27) & JP 3 081509 A (YAMAHA MOTOR CO LTD), 5 April 1991 (1991-04-05)

## Description

### FIELD OF THE INVENTION

This invention relates to a timing transmission mechanism for transmitting power from a crankshaft to a camshaft in an internal combustion engine, and more specifically to a chain drive for transmitting power from a crankshaft to camshafts in a four-cycle engine for an automobile.

### BACKGROUND OF THE INVENTION

Environmental concerns in recent years, and the related demand for high combustion efficiency in automobile engines, have resulted in the development of more powerful engines. The increase in engine power, in turn, has resulted in greater loads on engine components, including the timing chains.

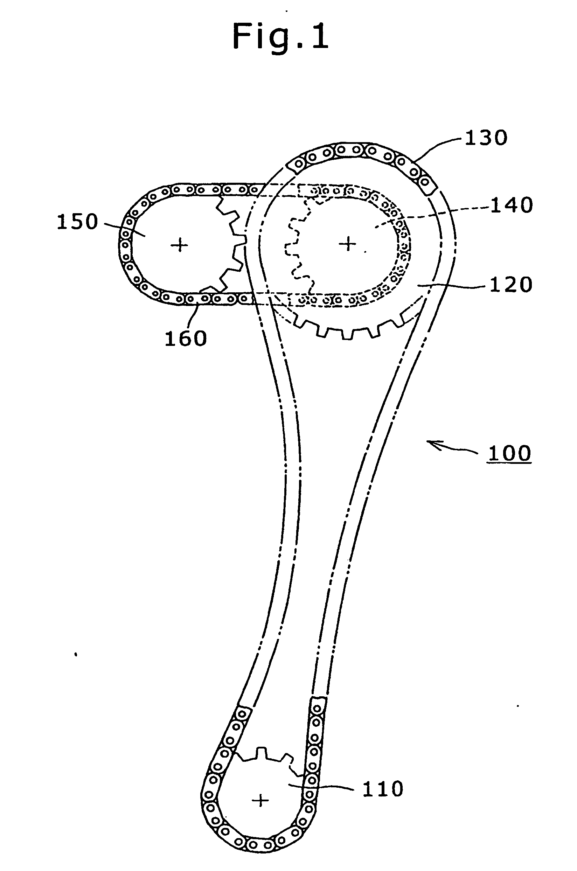

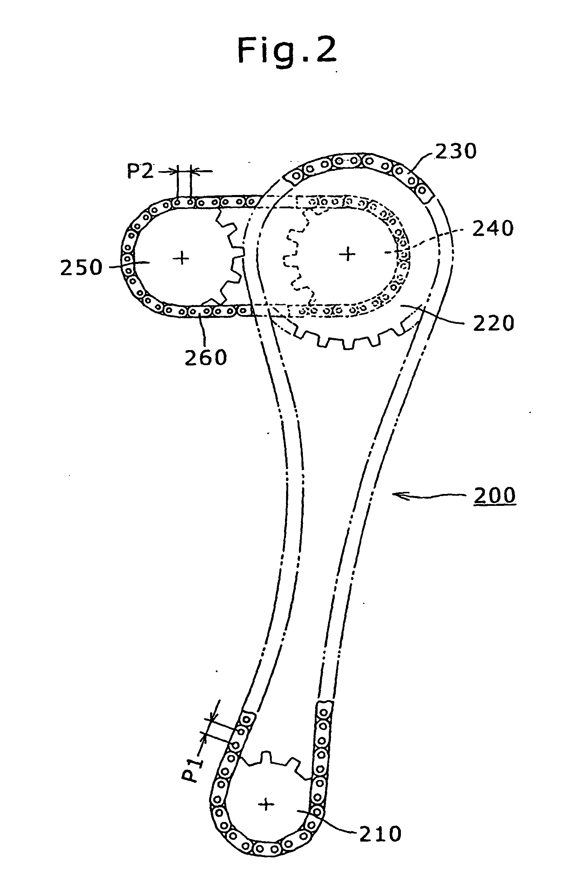

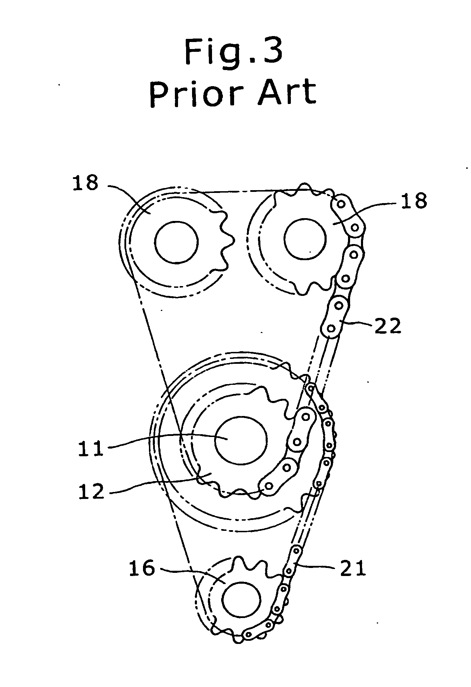

A typical conventional camshaft drive for a dual-cam engine, as shown in FIG. 3, includes an idler sprocket 12 disposed between a crank sprocket 16 and the camshaft sprockets 18. The camshaft sprockets are driven by a first timing chain 21 wrapped around the crank sprocket 16 and the idler sprocket 12, and a second timing chain 22 wrapped around the idler sprocket 12 and the camshaft sprockets 18. The chains 21 and 22 differ from each other in that the pitch of first chain 21 is less than the pitch of the second timing chain 22. This conventional camshaft drive is described in US-A-5 058 458 or on pages 1 and 2 and in FIGs. 1 and 2, of Japanese utility model registration publication No. 2507161. The increased pitch of the second timing chain 22, enables the timing transmission to withstand the severe loads encountered during engine operation. However, the relatively large pitch of the second timing chain 22, and the requirement for four shafts, including the intermediate shaft 11, impose limits on the degree to which the engine size can be reduced. The intervening idler sprocket also increases production cost. Moreover, in some cases two timing chains corresponding to chain 22 are used in order to withstand the high load. The use of two timing chains also results in higher costs. WO-A-01/49977 discloses a camshaft drive in accordance with the preamble of claim 1.

Accordingly, an object of this invention is to address the above-mentioned problems, and to provide a camshaft drive for the timing transmission of an engine, which is capable of withstanding high loads, but which enables the engine size to be reduced and also reduces production cost.

### SUMMARY OF THE INVENTION

These problems are solved by a camshaft drive according to claim 1. The engine camshaft drive in accordance with the invention comprises a crankshaft sprocket; large and small camshaft sprockets in coaxial relationship with each other, and fixedly connected to each other for rotation together about a first axis; a third camshaft sprocket spaced laterally from the large and small camshaft sprockets, and rotatable about a second axis parallel to the first axis; a driving chain wrapped around the crankshaft sprocket and the large camshaft sprocket, for transmitting rotational power from the crankshaft sprocket to the large camshaft sprocket; and a driven chain wrapped around the small camshaft sprocket and the third camshaft sprocket, for transmitting rotational power from the small camshaft sprocket to the third camshaft sprocket. The strength of the driven chain is less than the strength of the driving chain. In a preferred embodiment, the pitch of the driven chain is also smaller than the pitch of the driving chain.

The driving chain and the driven chain may be roller chains, or silent chains or the like. When silent chains are used, the camshaft drive produces less noise than is produced in the case where roller chains are used.

The strengths of the driving and driven chains in the camshaft drive according to the invention can be determined by the appropriate choice of chain parameters, including the chain structure, and the chain material. The appropriate chain structure can be chosen by taking into account factors such as the outer diameters of the chain connecting pins, and the thicknesses of the link plates.

In the camshaft drive according to the invention, rotating power is transmitted from the crankshaft sprocket to the larger camshaft sprocket through the driving chain. The camshaft sprocket rotates more slowly than the crankshaft sprocket. Rotating power, transmitted from the smaller camshaft sprocket, is transmitted to the other camshaft sprocket through the driven chain so that both camshafts rotate together, ordinarily at the same rotational speed.

Since the diameter of the crankshaft sprocket is smaller than the diameter of the larger camshaft sprocket, the driving chain transmits power under a high load. On the other hand, since the smaller of the coaxial larger and smaller camshaft sprockets has the same diameter as the other camshaft sprocket, the driven chain transmits power without incurring the high load conditions incurred in the driving chain.

Since strength of the driven chain is less than the strength of the driving chain, vibrations generated during power transmission by the driving chain and the driven chain, interfere with each other without producing resonance. Rotating power is more stably transmitted than in the case where both chains are designed to have the same chain strength.

### BRIEF DESCRIPTION OF THE DRAWINGS]

FIG. 1 is a schematic elevational view showing the configuration of a camshaft drive in accordance with a first embodiment of the invention;

FIG. 2 is a schematic elevational view showing the configuration of a camshaft drive in accordance with a second embodiment of the invention; and

FIG. 3 a schematic elevational view showing the configuration of a conventional camshaft drive.

### DETAILED DESCRIPTION OF THE PREFERRED EMBODIMENTS

As shown in FIG. 1, camshaft drive 100, which is used in a four cycle engine, comprises a roller chain 130, wrapped around a crankshaft sprocket 110 and a larger camshaft sprocket 120. Roller chain 130 is used as a driving chain, directly transmitting rotational power from the crankshaft to one of the two camshafts (not shown). The drive 100 also comprises a second roller chain 160 wrapped around a smaller sprocket 140, coaxial with sprocket 120, and a second smaller camshaft sprocket 150 on the other of the two camshafts. Sprocket 140 is fixed to sprocket 120, so that both sprockets rotate together. Thus, chain 160 serves as a driven chain, while chain 130 serves as a driving chain.

In the driven chain 160, the outer diameters of the pins which connect the links together, and/or the thicknesses of the link plates, are such that the strength of the driven chain 160 is less than the strength of the driving chain 130. Other chain component parameters, of course, may also affect the strengths of the chains.

Although the driving chain 130 and the driven chain 160 in FIG. 1 are roller chains, silent chains can be used as an alternative in order to reduce transmission noises.

The larger camshaft sprocket 120 has twice as many teeth as crankshaft sprocket 110, and consequently the camshaft sprockets 120 and 140 rotate at one-half the rotational speed of the crankshaft sprocket 110. The second smaller camshaft sprocket 150, which has the same number of teeth as sprocket 140, also rotates at one-half the rotational speed of the crankshaft sprocket.

In the operation of the camshaft drive 100, the rotational power produced at the crankshaft is transmitted from crankshaft sprocket 110 to the larger camshaft sprocket 120 through the driving chain 130. Sprocket 120, and the smaller sprocket 140, which is coaxial with sprocket 120, both rotate at one-half the rotational speed of the crankshaft sprocket, and the rotating power is transmitted from smaller sprocket 140 to the second, smaller, camshaft sprocket 150 through driven chain 160, so that both camshafts rotate at the same rate, for operation of the intake and exhaust valves of the engine.

The driven chain 160 does not need to have the load capacity of the driving chain 130. Thus, in the camshaft drive 100, by selecting a driven chain 160, having a chain strength less than that of the driving chain 130, the chains can be matched to the torques that they need to transmit without any disadvantages. As a result, two very significant improvements can be realized. The engine production cost can be reduced by utilizing a less expensive chain as the driven chain, and the engine size, and its product cost, can also be reduced as a result of the omission of the conventional intermediate shaft.

In the second embodiment of the invention, as shown in FIG. 2, a camshaft drive 200, also for a four cycle engine, comprises a roller chain 230, wrapped around a crankshaft sprocket 210 and a larger camshaft sprocket 220. Roller chain 230 is used as a driving chain, directly transmitting rotational power from the crankshaft to one of the two camshafts (not shown). The drive 200 also comprises a second roller chain 260 wrapped around a smaller sprocket 240, coaxial with sprocket 220, and a second smaller camshaft sprocket 250 on the other of the two camshafts. Sprocket 240 is fixed to sprocket 220, so that both sprockets rotate together. Thus, chain 260 serves as a driven chain, while chain 230 serves as a driving chain.

In the driven chain 260, the outer diameters of the pins which connect the links together, and/or the thicknesses of the link plates, are such that the strength of the driven chain 260 is less than the strength of the driving chain 230. In this case, the chain pitch P2 of the driven chain 260 is also less than the chain pitch P1 of the driving chain 230.

As in the case of the transmission of FIG. 2, as in the case of FIG. 1, although the driving chain 230 and the driven chain 260 are roller chains, silent chains can be used as an alternative in order to reduce transmission noises.

The larger camshaft sprocket 220 has twice as many teeth as crankshaft sprocket 210, and consequently the camshaft sprockets 220 and 240 rotate at one-half the rotational speed of the crankshaft sprocket 210. The second smaller camshaft sprocket 250, which has the same number of teeth as sprocket 240, also rotates at one-half the rotational speed of the crankshaft sprocket.

In the operation of the camshaft drive 200, the rotational power produced at the crankshaft is transmitted from crankshaft sprocket 210 to the larger camshaft sprocket 220 through the driving chain 230. Sprocket 220, and the smaller sprocket 240, which is coaxial with sprocket 220, both rotate at one-half the rotational speed of the crankshaft sprocket, and the rotating power is transmitted from smaller sprocket 240 to the second, smaller, camshaft sprocket 250 through driven chain 260, so that both camshafts rotate at the same rate, for operation of the intake and exhaust valves of the engine.

The driven chain 260 does not need to have the load capacity of the driving chain 230. Thus, in the camshaft drive 200, by selecting a driven chain 260, having a chain strength less than that of the driving chain 230, the chains can be matched to the torques that they need to transmit without any disadvantages. As a result, the same two significant improvements can be realized in the timing transmission of FIG. 2 as in the case of the transmission of FIG. 1. The engine production cost can be reduced by utilizing a less expensive chain as the driven chain, and the engine size and its product cost can also be reduced as a result of removal of the conventional intermediate shaft.

An additional significant improvement afforded by the embodiment of FIG. 2 is that, since the chain pitch P2 of the driven chain 260 is less than the chain pitch P1 of the driving chain 230, the driven chain and the smaller camshaft sprockets 240 and 250 can be reduced in size.

In summary, in the invention, a first one of the camshafts is driven directly through a drive chain by the crankshaft, and the other camshaft is driven through a driven chain, which does not need to be as strong as the driving chain. By decreasing the strength of the driven chain, which does not need to sustain loads as high as those imposed on the drive chain, the chains can be matched to the torques incurred in the respective parts of the power transmission without incurring disadvantages. As a result, a cost reduction can be realized. Moreover, since the intermediate shaft, used in a conventional timing transmission can be eliminated, the size of the engine can be reduced.

Furthermore, in accordance with another aspect of the invention, the pitch of the driven chain can be made smaller than the pitch of the driving chain. If this is done, the sizes of the driven chain and the camshaft sprockets can also be reduced, whereby further reduction in the overall size of the engine can be realized.

## Claims

1. A camshaft drive (100; 200) for an engine comprising:
a crankshaft sprocket (110; 210);
large and small camshaft sprockets (120, 140; 220, 240) in coaxial relationship with each other, and fixedly connected to each other for rotation together about a first axis;
a third camshaft sprocket (150; 250), spaced laterally from said large and small camshaft sprockets (120, 140; 220, 240), and rotatable about a second axis parallel to said first axis;
a driving chain (130; 230), wrapped around the crankshaft sprocket (110; 210) and said large camshaft sprocket (120; 220), for transmitting rotational power from the crankshaft sprocket (110; 210) to said large camshaft sprocket (120; 220); and
a driven chain (160; 260), wrapped around said small camshaft sprocket (140; 240) and said third camshaft sprocket (150; 250), for transmitting rotational power from said small camshaft sprocket (140; 240) to said third camshaft sprocket (150; 250);
wherein the strength of said driven chain (160; 260) is less than the strength of said driving chain (130; 230).

2. A camshaft drive (100; 200) according to claim 1, in which the pitch (P2) of said driven chain (160; 260) is smaller than the pitch (P1) of said driving chain (130; 230).

## Patentansprüche

1. Nockenwellenantrieb (100; 200) für einen Motor, umfassend:
ein Kurbelwellenkettenrad (110; 210),
große und kleine Nockenwellenkettenräder (120, 140; 220, 240), die zur gemeinsamen Drehung um eine erste Achse in koaxialer Beziehung zueinander und fest miteinander verbunden sind,
ein drittes Nockenwellenkettenrad (150; 250), das seitlich von den großen und kleinen Nockenwellenkettenrädern (120, 140; 220, 240) beabstandet ist und um eine zu der ersten Achse parallele zweite Achse drehbar ist,
eine Antriebskette (130; 230), die zur Übertragung einer Drehkraft von dem Kurbelwellenkettenrad (110; 210) zu dem großen Nockenwellenkettenrad (120; 220) um das Kurbelwellenkettenrad (110; 210) und das große Nockenwellenkettenrad (120; 220) gewunden ist, und
eine Abtriebskette (160; 260), die zur Übertragung einer Drehkraft von dem kleinen Nockenwellenkettenrad (140; 240) zu dem dritten Nockenwellenkettenrad (150; 250) um das kleine Nockenwellenkettenrad (140; 240) und das dritte Nockenwellenkettenrad (150; 250) gewunden ist,
wobei die Festigkeit der Abtriebskette (160; 260) geringer ist als die Festigkeit der Antriebskette (130; 230).

2. Nockenwellenantrieb (100; 200) nach Anspruch 1, bei dem die Teilung (P2) der Abtriebskette (160; 260) kleiner ist als die Teilung (P1) der Antriebskette (130; 230).

## Revendications

1. Un mécanisme d'entraînement d'arbre à cames (100 ; 200) pour un moteur comprenant :
un pignon à chaîne de vilebrequin (110 ; 210) ;
un grand et un petit pignons à chaîne d'arbre à cames (120,140 ; 220, 240) en relation coaxiale l'un avec l'autre et reliés de manière fixe l'un à l'autre pour une rotation ensemble autour d'un premier axe ;
un troisième pignon à chaîne d'arbre à cames (150 ; 250) écarté latéralement desdits grand et petit pignons à chaîne d'arbre à cames (120, 140 ; 220, 240) et pouvant toumer autour d'un second axe parallèle audit premier axe ;
une chaîne d'entraînement (130 ; 230) enroulée autour du pignon à chaîne de vilebrequin (110 ; 210) et dudit grand pignon à chaîne d'arbre à cames (120 ; 220) pour transmettre la puissance de rotation depuis le pignon à chaîne de vilebrequin (110 ; 210) audit grand pignon à chaîne (120 ; 220) ; et
une chaîne entraînée (160 ; 260) enroulée autour dudit petit pignon à chaîne d'arbre à cames (140 ; 240) et dudit troisième pignon à chaîne d'arbre à cames (150 ; 250) pour transmettre la puissance de rotation depuis ledit petit pignon à chaîne d'arbre à cames (140 ; 240) audit troisième pignon à chaîne d'arbre à cames (150 ; 250) ;
dans lequel la résistance de ladite chaîne entraînée (160 ; 260) est inférieure à la résistance de ladite chaîne d'entraînement (130 ; 230).

2. Un mécanisme d'entraînement d'un arbre à cames (100 ; 200) selon la revendication 1,
dans lequel le pas (P2) de ladite chaîne entraînée (160 ; 260) est inférieur au pas (P1) de ladite chaîne d'entraînement (130 ; 230).
